# EUROPEAN PATENT SPECIFICATION

(11) **EP 4 186 320 B1**
(45) Date of publication and mention of the grant of the patent: **27.05.2026**
(21) Application number: 21762243.0
(22) Date of filing: 04.08.2021
(51) Int. Cl.: H04W 76/14, H04W 76/10, H04W 88/04, H04W 76/12

(54) **CONNECTION SETUP OF SIDELINK RELAYS**
VERBINDUNGSAUFBAU FÜR SEITENVERBINDUNGSWEITERLEITER
ÉTABLISSEMENT DE CONNEXION DE RELAIS DE LIAISON LATÉRALE

(30) Priority: 05.08.2020 US 202063061547 P
(43) Date of publication of application: 31.05.2023
(73) Proprietor: Huawei Technologies Co., Ltd., Shenzhen, Guangdong 518129 (CN)
(72) Inventor: BI, Hao, Rolling Meadows, Illinois 60008 (US)
(74) Representative: Gill Jennings & Every LLP
(86) International application number: PCT/US2021/044539
(87) International publication number: WO 2021/195646

(56) References cited:
- EP-A1- 2 954 748
- EP-A1- 3 319 393
- US-A1- 2020 100 308
- US-A1- 2020 120 728
- "3rd Generation Partnership Project; Technical Specification Group Radio Access Network; Study on further enhancements to LTE Device to Device (D2D), User Equipment (UE) to network relays for Internet of Things (IoT) and wearables; (Release 15)", 3GPP STANDARD; TECHNICAL REPORT; 3GPP TR 36.746, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.1.1, 15 April 2018 (2018-04-15), pages 1 - 55, XP051451110
- ZTE: "eNB involvement in remote UEs authorization and connection establishment", vol. RAN WG2, no. Beijing, P.R. China; 20150824 - 20150828, 15 August 2015 (2015-08-15), XP050994120, Retrieved from the Internet <URL:http://www.3gpp.org/ftp/tsg_ran/WG2_RL2/TSGR2_91/Docs/> [retrieved on 20150815]
- "3rd Generation Partnership Project; Technical Specification Group Radio Access Network; Evolved Universal Terrestrial Radio Access (E-UTRA); Radio Resource Control (RRC); Protocol specification (Release 16)", vol. RAN WG2, no. V16.1.1, 26 July 2020 (2020-07-26), pages 1 - 1078, XP051925852, Retrieved from the Internet <URL:ftp://ftp.3gpp.org/Specs/archive/36_series/36.331/36331-g11.zip 36331-g11.docx> [retrieved on 20200726]
- "3rd Generation Partnership Project; Technical Specification Group Radio Access Network; NR; Radio Resource Control (RRC) protocol specification (Release 16)", vol. RAN WG2, no. V16.1.0, 24 July 2020 (2020-07-24), pages 1 - 906, XP051925836, Retrieved from the Internet <URL:ftp://ftp.3gpp.org/Specs/archive/38_series/38.331/38331-g10.zip 38331-g10.docx> [retrieved on 20200724]

## Description

### TECHNICAL FIELD

The present disclosure relates generally to methods and apparatus for digital communications, and, in particular implementations, to methods and apparatus for connection setup of sidelink relays.

### BACKGROUND

In general, a user equipment (UE) can be in direct communication with a radio access network (RAN). The UE may also be in sidelink communication with another UE. If the UE is out of coverage of the RAN, the UE cannot communicate with the RAN. However, a UE that is in direct communication with the RAN can serve as a relay UE for the UE that is out of coverage of the RAN. In other words, the relay UE allows the UE to have indirect communication with the RAN, with the relay UE serving as intermediary between the UE and the RAN. The relay UE in this situation is referred to as a sidelink relay.

There is a need for methods and apparatus for connection setup of sidelink relays.

EP2954748A1 relates to relaying user communication device. EP3319393A1 relates to establishing a connection between a remote user equipment and a telecommunication network via a relay capable UE. US2020100308A1 relates to method for handling of a RRC connection request message of a remote ue by a relay ue in wireless communication system and a device therefor. US2020120728A1 relates to radio resource control connection establishment.

"3rd Generation Partnership Project; Technical Specification Group Radio Access Network; Study on further enhancements to LTE Device to Device (D2D), User Equipment (UE) to network relays for Internet of Things (IoT) and wearables; (Release 15)", 3GPP STANDARD; TECHNICAL REPORT; 3GPP TR 36.746, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20180415), vol. RAN WG2, no. V15.1.1, pages 1 - 55, relates to enhancements to LTE Device to Device (D2D) User Equipment (UE) to network relays for Internet of Things (IoT) and wearables.

ZTE, "eNB involvement in remote UEs authorization and connection establishment", vol. RAN WG2, no. Beijing, P.R. China; 20150824 - 20150828, (20150815), 3GPP DRAFT; R2-153768 - ENB INVOLVEMENT IN REMOTE UE AUTHORIZATION & CONNECTION ESTABLISHMENT, 3RD GENERATION PARTNERSHIP PROJECT (3GPP), MOBILE COMPETENCE CENTRE ; 650, ROUTE DES LUCIOLES ; F-06921 S, URL: http://www.3gpp.org/ftp/tsg_ran/WG2_RL2/TSGR2_91/Docs/, (20150815), relates to eNB involvement in remote UEs authorization and connection establishment.

"3rd Generation Partnership Project; Technical Specification Group Radio Access Network; Evolved Universal Terrestrial Radio Access (E-UTRA); Radio Resource Control (RRC); Protocol specification (Release 16)", vol. RAN WG2, no. V16.1.1, (20200726), pages 1 - 1078, 3GPP STANDARD; TECHNICAL SPECIFICATION; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: ftp://ftp.3gpp.org/Specs/archive/36_series/36-331/36331-g11.zip 36331-g11.docx, (20200726), relates to radio resource control (RRC) protocol specification.

"3rd Generation Partnership Project; Technical Specification Group Radio Access Network; NR; Radio Resource Control (RRC) protocol specification (Release 16)", vol. RAN WG2, no. V16.1.0, (20200724), pages 1 - 906, 3GPP STANDARD; TECHNICAL SPECIFICATION; 3GPP TS 38.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: ftp://ftp.3gpp.org/Specs/archive/38_series/38.331/38331-g10.zip 38331-g10.docx, (20200724), relates to radio resource control (RRC) protocol specification.

### SUMMARY

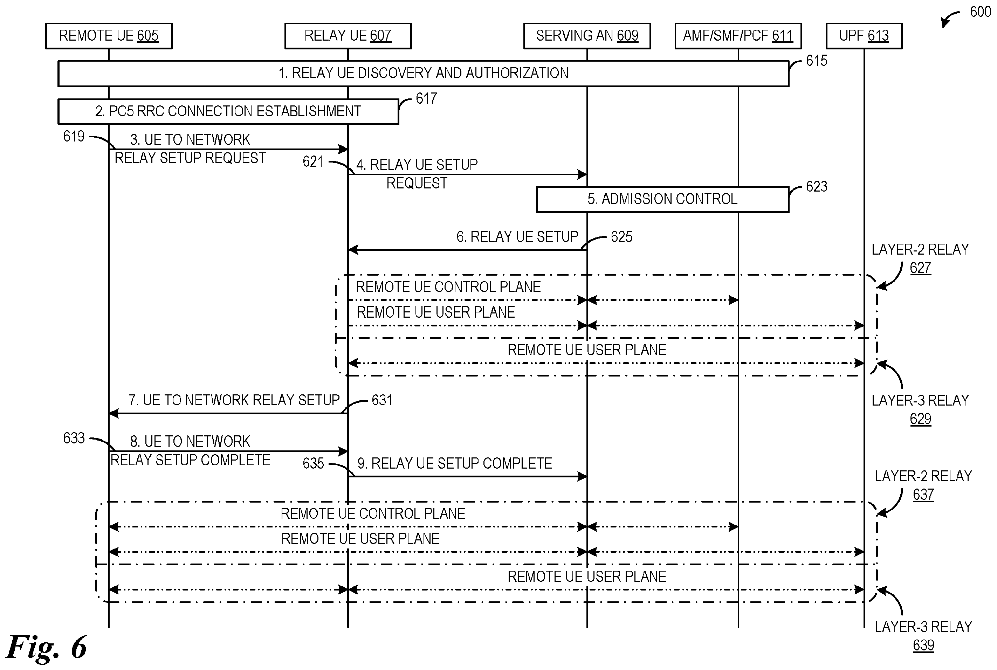

The invention has been defined in the independent claims. Further specific technical features have been defined in the dependent claims. In the following description the subject-matter of figures 6, 8, 12A, 13, 14 and their descriptions is covered by the independent claims. The rest of the following description and figures is not or is not fully covered by the independent claims but is useful for understanding the invention.

An advantage of a preferred implementation is that a first UE within RAN coverage can support communication for a second UE over a sidelink connection between the two UEs. The sidelink connection also provides support for QoS requirements.

### BRIEF DESCRIPTION OF THE DRAWINGS

Figure 1 illustrates a first example communications system;
Figure 2 illustrates a communication system highlighting a UE to network connection supported by a relay UE;
Figure 3 illustrates an example user plane (UP) protocol stack of an example communication system;
Figure 4 illustrates an example control plane (CP) protocol stack of an example communication system;
Figure 5 illustrates protocol stack of an example communication system with a Layer-3 sidelink relay;
Figure 6 illustrates a diagram of communications exchanged and processing performed by entities involved in an example connection setup procedure for UE to network relay according to example implementations presented herein;
Figure 7 illustrates a flow diagram of example operations occurring in a remote UE participating in the establishment of a UE to network relay connection according to example implementations presented herein;
Figure 8 illustrates a flow diagram of example operations occurring in a relay UE participating in the establishment of a UE to network relay connection according to example implementations presented herein;
Figure 9 illustrates a flow diagram of example operations occurring in a serving access node participating in the establishment of a UE to network relay connection according to example implementations presented herein;
Figure 10 illustrates a flow diagram of example operations occurring in a network control function participating in the establishment of a UE to network relay connection according to example implementations presented herein;
Figure 11 illustrates an example communication system according to example implementations presented herein;
Figures 12A and 12B illustrate example devices that may implement the methods and teachings according to this disclosure;
Figure 13 is a block diagram of a computing system that may be used for implementing the devices and methods disclosed herein;
Figure 14 illustrates a block diagram of an implementation processing system for performing methods described herein, which may be installed in a host device; and
Figure 15 illustrates a block diagram of a transceiver adapted to transmit and receive signaling over a telecommunications network according to example implementations presented herein.

### DETAILED DESCRIPTION OF ILLUSTRATIVE IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those that comprise at least all the features of an independent claim. Any implementation that does not fall within the scope of the claims does not form part of the invention, but rather included as an illustrative example that is useful for understanding the invention.

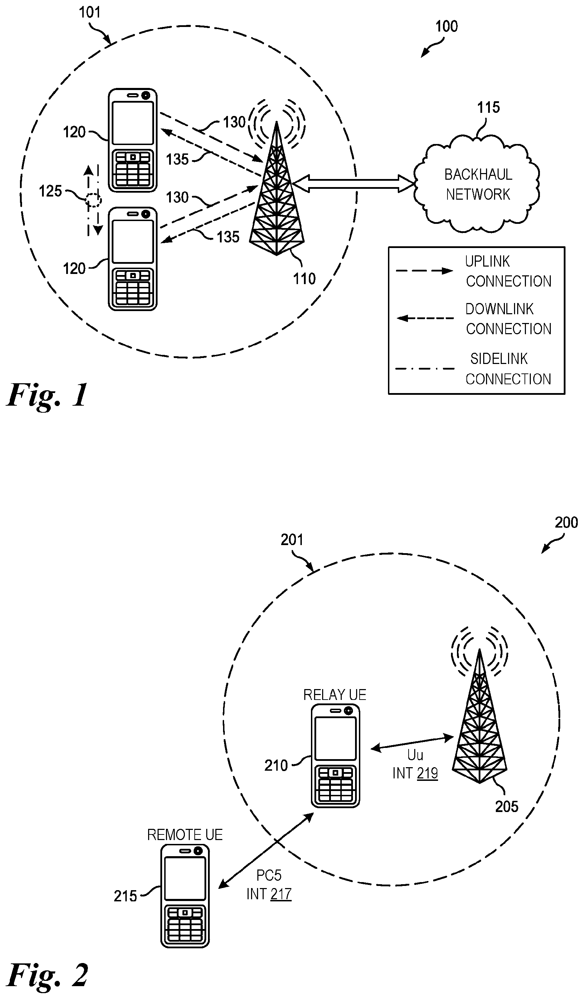

Figure 1 illustrates a first example communications system 100. Communications system 100 includes an access node 110, with coverage area 101, serving user equipments (UEs), such as UEs 120. Access node 110 is connected to a backhaul network 115 that provides connectivity to services and the Internet. In a first operating mode, communications to and from a UE passes through access node 110. In a second operating mode, communications to and from a UE do not pass through access node 110, however, access node 110 typically allocates resources used by the UE to communicate when specific conditions are met. Communication between a UE pair in the second operating mode occurs over sidelinks 125, comprising device-to-device or peer-to-peer communication links. Communication between a UE and access node pair also occur over uni-directional communication links, where the communication links between the UE and the access node are referred to as uplinks 130, and the communication links between the access node and UE is referred to as downlinks 135.

Access nodes may also be commonly referred to as Node Bs, evolved Node Bs (eNBs), next generation (NG) Node Bs (gNBs), master or primary eNBs (MeNBs), secondary eNBs (SeNBs), master or primary gNBs (MgNBs), secondary gNBs (SgNBs), network controllers, control nodes, base stations, access points, transmission points (TPs), transmission-reception points (TRPs), cells, carriers, macro cells, femtocells, pico cells, and so on, while UEs may also be commonly referred to as mobile stations, mobiles, terminals, users, subscribers, stations, and the like. Access nodes may provide wireless access in accordance with one or more wireless communication protocols, e.g., the Third Generation Partnership Project (3GPP) long term evolution (LTE), LTE advanced (LTE-A), 5G, 5G LTE, 5G NR, sixth generation (6G), High Speed Packet Access (HSPA), the IEEE 802.11 family of standards, such as 802.11a/b/g/n/ac/ad/ax/ay/be, etc. While it is understood that communications systems may employ multiple access nodes capable of communicating with a number of UEs, only one access node and two UEs are illustrated for simplicity. Figure 2 illustrates a communication system 200 highlighting a UE to network connection supported by a relay UE. Communication system 200 has a coverage area 201. Communication system 200 includes an access node 205 that is serving a first UE 210. Also shown in Figure 2 is a second UE 215. Second UE 215 is outside of coverage area 201 of communication system 201, hence second UE 215 is unable to connect to access node 205. First UE 210 is capable of operating as a relay UE.

Second UE 215 connects with first UE 210 through a PC5 interface 217 over a sidelink. First UE 210 is operating in this situation as a relay UE and is referred to as such. Furthermore, second UE 215 is operating as a remote UE and is referred to as such. Relay UE 210 is connected to access node 205 through a Uu interface 219. Hence, relay UE 210 is able to pass packets received from remote UE 215 to access node 205 on the uplink. Conversely, relay UE 210 is able to forward packets received from access node 205 to remote UE 215. In this way, an indirect connection path is established between remote UE 215 and access node 205, with the help of relay UE 210.

In 3GPP RP-193253, "New SID: Study on NR sidelink relay," specifies "For layer-2 UE-to-network relay, the architecture of end-to-end packet data convergence protocol (PDCP) and hop-by-hop radio link control (RLC), e.g., as recommended in TR 36.746, is taken as starting point."

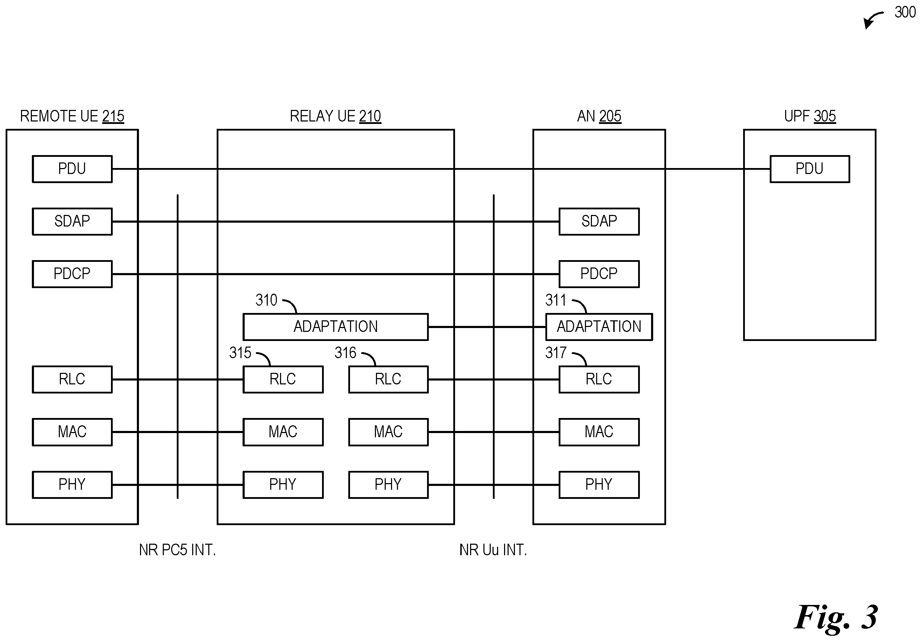

Figure 3 illustrates an example user plane (UP) protocol stack 300 of an example communication system. UP protocol stack 300 includes entities at remote UE 215, relay UE 210, access node 205, and user plane function (UPF) 305. An entity at adaptation layer 310 of relay UE 210 resides on top of PC5 RLC entity 315 and Uu RLC entity 316 of relay UE 210, where the packets of remote UE 215 carried in RLC channel from remote UE 215 to relay UE 210 is mapped to a RLC channel from relay UE 210 to access node 205, and vice versa. Similarly, Adaptation layer 311 of access node 205 resides on top of RLC entity 317 of access node 205, where adaptation layer 311 maps the packets of remote UE 215 carried in RLC channel from relay UE 210 to access node 205 to remote UE's radio bearer, and vice versa. Because adaptation layers 310 and 311 apply to RLC channels of all radio bearers, adaptation layers 310 and 311 support both signaling radio bearers (SRBs) and data radio bearers (DRBs) of remote UE 215.

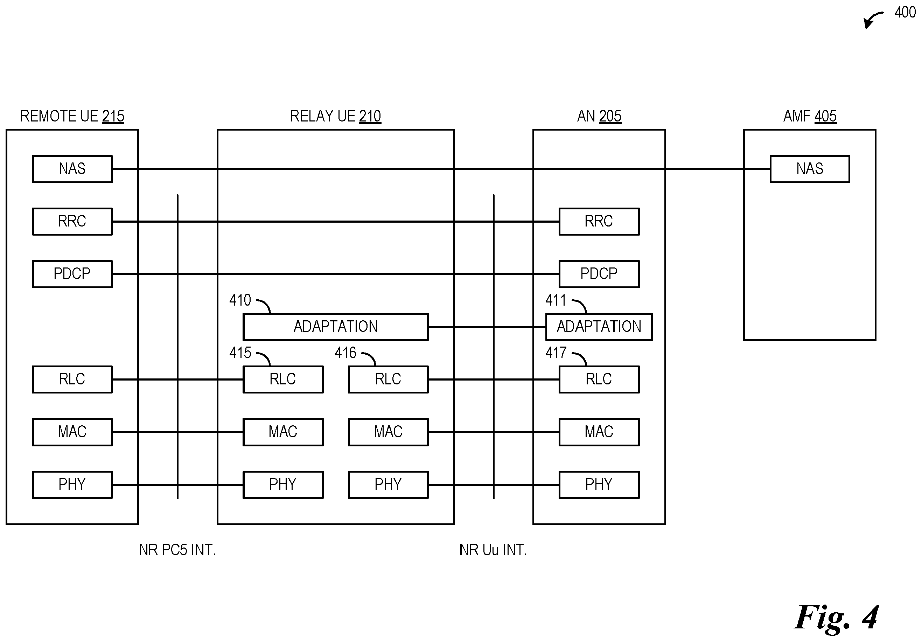

Figure 4 illustrates an example control plane (CP) protocol stack 400 of an example communication system. CP protocol stack 400 includes entities at remote UE 215, relay UE 210, access node 205, and access and mobility management function (AMF) 405. An adaptation layer 410 of relay UE 210 resides on top of RLC entity 415 and 416 of relay UE 210, where an entity at adaptation layer map the packets of remote UE 215 between RLC channel of remote UE 215 and a RLC channel of relay UE 210. Similarly, an entity of adaptation layer 411 of access node 205 resides on top of RLC layer 417 of access node 205, where the packets of a radio bearer of remote UE 215 is mapped to or from RLC channel 417 between relay UE 210 and access node 205. Because entities at adaptation layers 410 and 411 apply to RLC channels of all radio bearers, entities at adaptation layers 410 and 411 support both SRBs and DRBs of remote UE 215.

In general, a Layer-3 sidelink relay can relay unicast traffic (uplink and downlink) between the remote UE and the network (as specified in 3GPP TR 23.752) for:
- Internet Protocol (IP) traffic over a PC5 interface reference point, the ProSe UE-to-Network relay uses IP type protocol data unit (PDU) sessions towards the Fifth Generation core (5GC).
- Ethernet traffic over a PC5 interface reference point, the ProSe UE-to-Network relay can use Ethernet type PDU sessions or IP type PDU sessions towards the 5GC.
- Unstructured traffic over a 5GC interface reference point, the ProSe UE-to-Network relay can use unstructured type PDU sessions or IP type PDU sessions (i.e., IP encapsulation or de-capsulation by the UE-to-Network relay) towards the 5GC.

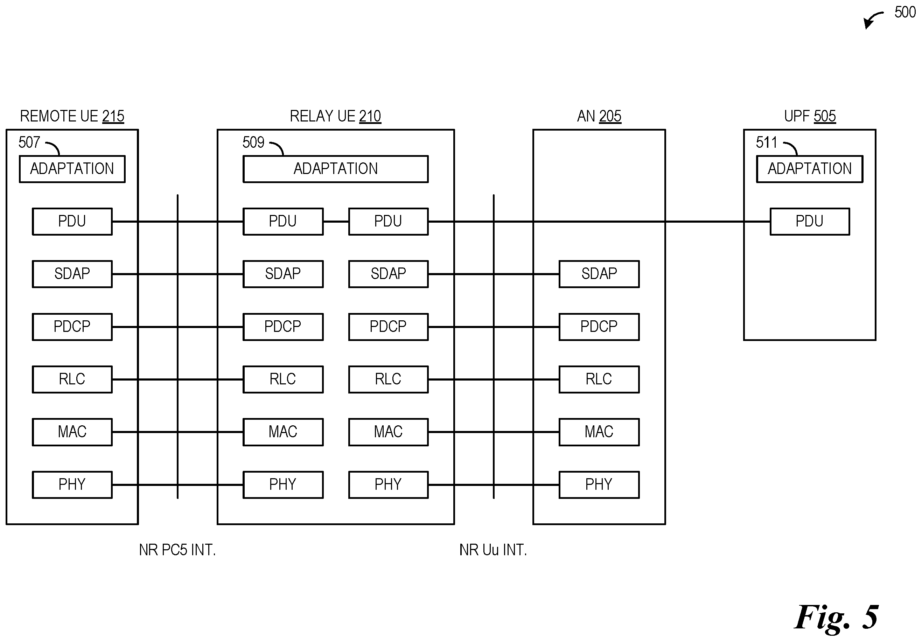

Figure 5 illustrated protocol stack 500 of an example communication system with a Layer-3 sidelink relay. The communication system includes remote UE 215, relay UE 210 (which is the Layer-3 sidelink relay), access node 205, and a UPF 505.

In the Layer-3 UE-to-Network relay approach, a 5G Quality of Service (QoS) flow is initially mapped to a PC5 QoS flow for sidelink transmission, then the PC5 QoS flow is mapped to the 5G QoS flow of relay UE 210 for transmission over the Uu interface. Finally, the 5G QoS flow of relay UE 210 is mapped back to the 5G QoS flow associated with remote UE 215 at UPF 505. The mapping of the flows occur in the adaptation layer, such as adaptation layer 507 of remote UE 215, adaptation layer 509 of relay UE 210, and adaptation layer 511 of UPF 505.

Because the Layer-3 sidelink relay operates at the level of PDU connections, the Layer-3 sidelink relay does not relay control plane data between remote UE 215 and access node 205 through relay UE 210. On the other hand, the Layer-2 sidelink relay operates at the level of RLC channels, and is agnostic to SRBs or DRBs. Therefore, both control plane and data plane data for remote UE 215 and access node 205 can be relayed by relay UE 210.

According to an example implementation, methods and apparatus for indirect connection setup between a remote UE and an access node are provided. A relay UE serves as a sidelink relay, relaying both control plane and user plane data between the remote UE and the access node. A variety of techniques may be used to setup the indirect connection. As an example, sidelink unicast communications may be used.

Figure 6 illustrates a diagram 600 of communications exchanged and processing performed by entities involved in an example connection setup procedure for UE to network relay. The entities exchanging communications and performing processing include a remote UE 605, a relay UE 607, a serving access node 609, an AMF/session management function (SMF)/policy control function (PCF) 611, and a UPF 613. Figure 6 illustrates the connection setup procedure for both Layer-2 and Layer-3 sidelink relay models.

For both Layer-2 and Layer-3 sidelink relay models,
- A PC5 RRC connection is needed to configure a sidelink bearer for unicast transmission between remote UE 605 and relay UE 607.
- A RRC connection between relay UE 607 and the RAN is involved for the RAN to provide to relay UE 607 the sidelink bearer configuration for the PC5 segment of the UE to network relay connection.

The RRC connection between relay UE 607 and the RAN also configures the adaptation layer in the Layer-2 sidelink relay model.

Discovery and authorization of relay UE 607 is performed (block 615). Remote UE 605, serving access node 609, AMF/SMF/PCF 611, and relay UE 607 perform discovery and authorization to discover a relay UE (i.e., relay UE 607) that is a suitable relay for remote UE 605, as well as authorized to serve as a relay UE for remote UE 605. In both the Layer-2 and Layer-3 relay UE models, the discovery and authorization of relay UE 607 includes the authorization of relay UE 607. Furthermore, remote UE 605 is provided with information associated with serving access node 609, including the public land mobile network (PLMN) identity and cell identity of serving access node 609.

Relay UE 607 and remote UE 605 establish a PC5 RRC connection (block 617). The PC5 RRC connection supports unicast communications between remote UE 605 and relay UE 607, for example. As an example, the establishment of the PC5 RRC connection is accomplished by relay UE 607 and remote UE 605 exchanging messaging.

After successfully discovering and authorizing relay UE 607, remote UE 605 sends a UE to network connection setup request to relay UE 607 (event 619). Remote UE 605 requests the establishment of the UE to network relay by sending a request to relay UE 607. The request includes information, such as the PLMN of serving access node 609 and the identity of remote UE 605. In the case of the Layer-3 relay model, remote UE 605 also provides information regarding the PC5 QoS flow to be used for the UE to network relay. Relay UE 607 forwards the request to serving access node 609 (event 621). Relay UE 607 forwards the request, along with the information included therein (e.g., the PLMN of serving access node 609 and the identity of remote UE 605), to serving access node 609.

Serving access node 609 and AMF/SMF/PCF 611 perform admission control (block 623). Serving access node 609 and AMF/SMF/PCF 611 perform policy check and admission control to allow the indirect 5G connection of remote UE 605 through relay UE 607. The policy check and admission control are performed based on information associated with remote UE 605 and relay UE 607. In the case of the Layer-2 relay model, serving access node 609 is also provided with the QoS information of remote UE 605.

Serving access node 609 sends a relay UE setup response to relay UE 607 (event 625). Serving access node 609 provides relay UE 607 with a RLC configuration of a remote UE's DRB over a PC5 interface between remote UE 605 and relay UE 607. In the case of the Layer-2 relay model, the serving access node 609 also provides relay UE 607 with an adaptation configuration to map RLC channels of the Uu interface between relay UE 607 and serving access node 609, and the PC5 interface between remote UE 605 and relay UE 607, as well as a container of DRB configurations of remote UE 605. The DRB configurations may include service data application protocol (SDAP) and PDCP configurations, including the mapping of 5G QoS flows to DRBs. In the case of Layer-3 relay model, the serving access node 609 also provides relay UE 607 with SDAP and PDCP configurations of sidelink DRBs over the PC5 interface between remote UE 605 and relay UE 607, including the PC5 QoS flow to DRB mappings.

Dashed box 627 illustrates the control plane and user plane connections for remote UE 607 present in the Layer-2 relay model. Dashed box 629 illustrates the user plane connection for remote UE 607 in the Layer-3 relay model. The control plane and user plane connections currently stop at relay UE 607.

Relay UE 607 sends a UE to network relay setup response to remote UE 605 (event 631). Relay UE 607 configures RLC entities of the sidelink bearers. In the case of the Layer-2 relay model, relay UE 607 also forwards the signaling container of bearer configurations of remote UE 605 to remote UE 605. The signaling container of bearer configurations includes, for example, SDAP and PDCP configurations, including the mapping of 5G QoS flows to DRBs. In the case of the Layer-3 relay model, relay UE 607 configures remote UE 605 with SDAP and PDCP configurations of sidelink DRBs over the PC5 interface between remote UE 605 and relay UE 607, including the PC5 QoS flow to DRB mappings.

Remote UE 605 sends UE to network relay setup complete message to relay UE 607 (event 633). After establishing the RLC entities of the sidelink bearers, remote UE 605 provides confirmation of the establishment to relay UE 607. Remote UE 605 may also update the RLC configuration of the sidelink bearers. In the case of the Layer-2 relay model, remote UE 605 also provides to the relay UE 607 signaling containing the confirmation of the proper configuration of SDAP and PDCP entities of the UE to network DRBs. In the case of the Layer-3 relay model, remote UE 605 also provides to relay UE 607 the confirmation of the SDAP and PDCP configuration of the sidelink DRBs. Remote UE 605 may also provide possible updates of the SDAP and PDCP configurations of sidelink bearers.

Relay UE 607 forwards the relay UE setup complete message to serving access node 609 (event 635). Relay UE 607 informs serving access node 609 that the sidelink RLC channels have been established for the UE to network relay, for example. In the case of the Layer-2 relay model, relay UE 607 also informs serving access node 609 that the mapping between the sidelink RLC channels and Uu RLC channel carrying remote UE's same packets for the adaptation layer has been established. Relay UE 607 also forwards the container of confirmations of proper configuration of SDAP and PDCP entities of the UE to network bearers. In the case of the Layer-3 relay model, relay UE 607 also informs serving access node 609 that SDAP and PDCP entities have been established for the sidelink bearers.

Dashed box 637 illustrates the control plane and user plane connections for remote UE 607 present in the Layer-2 relay model. Dashed box 639 illustrates the user plane connection for remote UE 607 in the Layer-3 relay model. The control plane and user plane connections extend all the way to remote UE 605.

Table 1 provides a detailed listing of procedural steps in the example connection setup procedure for UE to network relay for both Layer-2 and Layer-3 relay models.

**Table 1: Procedural steps in Layer-2 and Layer-3 relay UE connection setup.**

| | **Layer-2 Relay** | **Layer-3 Relay** |
|---|---|---|
| 1. Relay UE Discovery and Authorization | The relay UE is authorized, and provides the remote UE with information of the serving access node, e.g., its PLMN and cell identities. | |
| 2. PC5 RRC Connection Establishment | PC5 RRC connection is established between the remote UE and relay UE for unicast communication. | |
| 3. UE to Network connection Setup Request | The remote UE requests the establishment of UE to network connection, and provides information, such as the selected PLMN, and its identity. | |
| | | The remote UE also provides the information of PC5 QoS flow to be used for UE to network relay. |
| 4. Relay UE Setup Request | The relay UE forwards the remote UE's request and information to the serving access node. | |
| 5. Admission Control | Based on the information of the remote UE and relay UE, the serving access node and access and mobility management, session management, and policy control functions (AMF/SMF/PCF) in network perform policy check and admission control to allow the indirect 5G connection of the remote UE through the relay UE. | |
| | The serving access node is provided with QoS flow information of the remote UE. | |
| 6. Relay UE Setup | The serving access node provides the relay UE with RLC configuration over PC5 interface between the remote UE and the relay UE. | |
| | The serving access node also provides the relay UE with adaptation configuration to map RLC channels of Uu interface (between the relay UE and the serving access node) and PC5 interface (between the remote UE and the relay UE) for remote UE's packets, | The serving access node also provides the relay UE with SDAP and PDCP configurations of sidelink DRBs over the PC5 interface between the remote UE and the relay UE, including |
| | and a signaling containing radio bearer configurations of the remote UE, such as SDAP and PDCP configurations, including the mapping of 5G QoS flow to DRB. | the PC5 QoS flow to DRB mapping. |
| 7. UE to Network Relay Setup | The relay UE configures RLC entities of sidelink bearers. | |
| | The relay UE also forwards to the remote UE the signaling containing radio bearer configurations of the remote UE, such as SDAP and PDCP configurations, including the mapping of 5G QoS flow to DRB. | The relay UE configures the remote UE with SDAP and PDCP configurations of sidelink DRBs over the PC5 interface between the remote UE and the relay UE, including the PC5 QoS flow to DRB mapping. |
| 8. UE to Network Relay Setup Complete | After establishing RLC entities of sidelink radio bearers, the remote UE provides the relay UE confirmation and possible updates of RLC configuration of sidelink radio bearers. | |
| | The remote UE also provides the relay UE with a signaling containing confirmation of proper configuration of SDAP and PDCP entities of UE to network radio bearers. | The remote UE also provides the relay UE confirmation and possible updates of SDAP and PDCP configuration of sidelink DRBs. |
| 9. Relay UE Setup Complete | The relay UE informs the serving gNB that sidelink RLC channels have been established for UE to network relay. | |
| | The relay UE also informs the serving access node the mapping is established between the sidelink RLC channel and Uu RLC channel carrying remote UE's packets of respective radio bearers for the adaptation layer. The relay UE forwards the signaling containing confirmation of proper configuration of SDAP and PDCP entities of UE to network radio bearers. | The relay UE also informs the serving access node that SDAP and PDCP entities have been established for sidelink DRBs. |

Although a UE to network relay connection may be established as described above for both Layer-2 and Layer-3 relay models, the remote UE served by the Layer-2 relay establishes both control plane and user plane connections with the serving access node and enter a RRC_Connected state, while the remote UE served by the Layer-3 relay does not establish presence in the RAN.

Furthermore, when the UE to network relay setup procedures presented above conclude, the Layer-2 relay can already operate its adaptation layer with proper configuration of RLC channel mapping between PC5 and Uu interfaces.

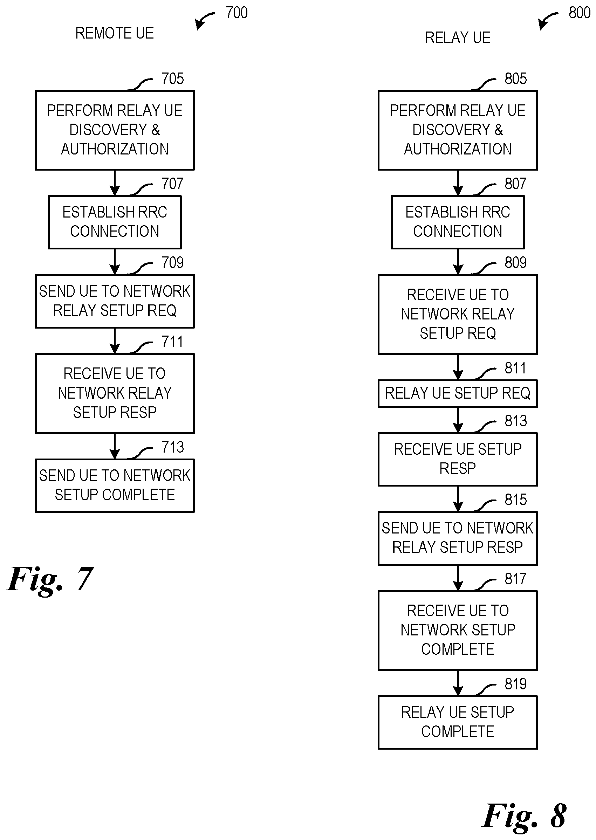

Figure 7 illustrates a flow diagram of example operations 700 occurring in a remote UE participating in the establishment of a UE to network relay connection. Operations 700 may be indicative of operations occurring in a remote UE as the remote UE participates in the establishment of a UE to network relay connection. Layer-2 and Layer-3 relay model connections may be established.

Operations 700 begin with the remote UE performing relay UE discovery and authorization (block 705). Relay UE discovery and authorization is performed to detect relay UEs that are suitable candidates for operation as a relay UE for the remote UE. As an example, in order to be a suitable candidate for operation as a relay UE for the remote UE, a relay UE may need to be located within a specified distance to the remote UE (or a channel between the remote UE and the remote UE has adequate signal quality), as well as the relay UE being amenable to serving as a relay UE for the remote UE and the relay UE be authorized to serve as a relay UE for the remote UE. As part of the relay UE discovery and authorization, the remote UE is provided with information related to the serving access node (e.g., the PLMN and cell identities of the serving access node).

The remote UE establishes a RRC connection (block 707). The RRC connection is established between the remote UE and the relay UE. The RRC connection supports unicast communication, for example. The remote UE sends a UE to network relay connection setup request (block 709). The UE to network relay connection setup request is a request for the establishment of the UE to network relay connection sent over a RLC channel over sidelink. The request includes information that includes a PLMN selected by the remote UE, as well as the identity of the remote UE. In the case of the Layer-3 relay model, the request also includes information regarding the PC5 QoS flow to be used for the UE to network relay connection.

The remote UE receives a UE to network relay setup response (block 711). The UE to network setup response may indicate to the remote UE that the UE to network relay setup is complete. The response may be received from the relay UE, where the relay UE has configured RLC entities of the sidelink radio bearers. In the case of the Layer-2 relay model, the remote UE also receives a signaling containing bearer configurations, which includes SDAP and PDCP configurations, such as the mappings of 5G QoS flows to DRBs. In the case of the Layer-3 relay model, the remote UE is configured with SDAP And PDCP configurations of the sidelink DRBs over the PC5 interface between the remote UE and the relay UE. The configurations may include the PC5 QoS flow to DRB mappings.

The remote UE sends a UE to network relay setup complete (block 713). The remote UE provides the relay UE with confirmation of the completion of the UE to network relay setup. The remote UE may also provide updates of the RLC configuration of the sidelink bearers. In the Layer-2 relay model, the remote UE also provides the relay UE with a signaling containing confirmation of the proper configuration of SDAP and PDCP entities of the UE to network bearers. In the Layer-3 relay model, the remote UE also provides the relay UE the confirmation (along with possible updates) of the SDAP and PDCP configuration of sidelink DRBs.

Figure 8 illustrates a flow diagram of example operations 800 occurring in a relay UE participating in the establishment of a UE to network relay connection. Operations 800 may be indicative of operations occurring in a relay UE as the relay UE participates in the establishment of a UE to network relay connection. Layer-2 and Layer-3 relay model connections may be established.

Operations 800 begin with the relay UE performing relay UE discovery and authorization (block 805). Relay UE discovery and authorization is performed to identify relay UEs that are suitable candidates for operation as a relay UE for a remote UE. As an example, in order to be a suitable candidate for operation as a relay UE for the remote UE, a relay UE may need to be located within a specified distance to the remote UE (or a channel between the remote UE and the remote UE has adequate signal quality), as well as the relay UE being amenable to serving as a relay UE for the remote UE and the relay UE be authorized to serve as a relay UE for the remote UE. As part of the relay UE discovery and authorization, the relay UE provides information related to the serving access node (e.g., the PLMN and cell identities of the serving access node).

The relay UE establishes a RRC connection (block 807). The RRC connection is established between the remote UE and the relay UE. The RRC connection supports unicast communication, for example. The relay UE receives a UE to network relay connection setup request (block 809). The relay UE receives the UE to network relay connection setup request from the remote UE. The UE to remote relay connection setup request is a request for the establishment of the UE to network relay connection. The request includes information that includes a PLMN information received by the remote UE from the relay UE, as well as the identity of the remote UE. In the case of the Layer-3 relay model, the request also includes information regarding the PC5 QoS flow to be used for the UE to network relay connection.

The relay UE forwards the UE to network relay connection setup request (block 811). The UE to network relay connection setup request is forwarded to a serving access node serving the relay UE, for example. The relay UE receives a UE to network relay connection setup response (block 813). The UE to network relay connection setup response is received from the serving access node. The relay UE receives the RLC configuration over the PC5 interface between the remote UE and the relay UE. In the Layer-2 relay mode, the relay UE is also provided with the adaptation configuration to map RLC channels of the Uu interface (between the serving access node and the relay UE) and RLC channels of the PC5 interface (between the relay UE and the remote UE) for remote UE's packets of corresponding radio bearers, and a signaling containing radio bearer configurations of the remote UE, including SDAP and PDCP configurations (e.g., mappings of 5G QoS flows to DRBs, etc.). The relay UE sends the UE to network relay connection setup response (block 815). The relay UE sends the UE to network relay connection setup response to the remote UE, for example.

The relay UE receives the UE to network setup complete message (block 817). The UE to network setup complete message is received from the remote UE, for example. The relay UE receives signaling confirming the completion of the UE to network relay setup. The relay UE may also provide updates of the RLC configuration of the sidelink radio bearers. In the Layer-2 relay model, the relay UE receives a signaling containing confirmation of the proper configuration of SDAP and PDCP entities of the UE to network radio bearers. In the Layer-3 relay model, the relay UE receives the confirmation (along with possible updates) of the SDAP and PDCP configuration of sidelink DRBs.

The relay UE forwards the UE to network setup complete message (block 819). The relay UE informs the serving access node that sidelink RLC channels have been established for the UE to network relay, for example. In the Layer-2 relay model, the relay UE informs the serving access node that the mapping is established between the sidelink RLC channel and Uu RLC channel for packets of remote UE's respective radio bearers for the adaptation layer. The relay UE forwards the signaling containing confirmation of proper configuration of SDAP and PDCP entities of UE to network radio bearers. In the Layer-3 relay model, the relay UE informs the serving access node that SDAP and PDCP entities have been established for sidelink DRBs.

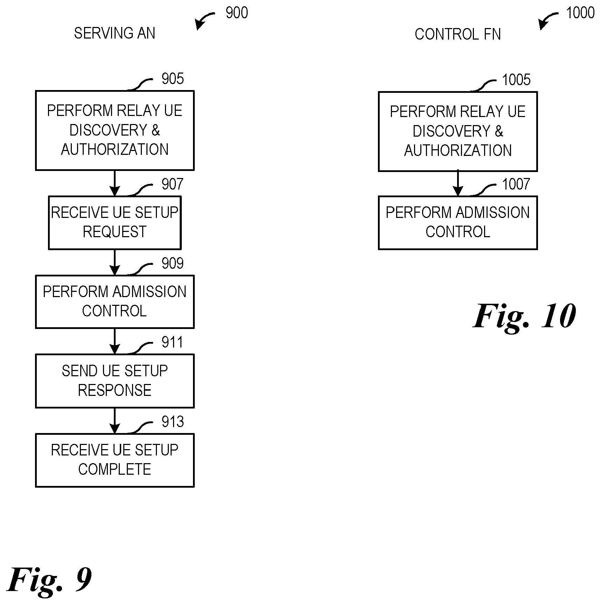

Figure 9 illustrates a flow diagram of example operations 900 occurring in a serving access node participating in the establishment of a UE to network relay connection. Operations 900 may be indicative of operations occurring in a serving access node as the serving access node participates in the establishment of a UE to network relay connection. Layer-2 and Layer-3 relay model connections may be established.

Operations 900 begin with the serving access node performing relay UE discovery and authorization (block 905). Relay UE discovery and authorization is performed to detect relay UEs that are suitable candidates for operation as a relay UE for a remote UE. As an example, in order to be a suitable candidate for operation as a relay UE for the remote UE, a relay UE may need to be located within a specified distance to the remote UE (or a channel between the remote UE and the remote UE has adequate signal quality), as well as the relay UE being amenable to serving as a relay UE for the remote UE and the relay UE be authorized to serve as a relay UE for the remote UE. As part of the relay UE discovery and authorization, the remote UE is provided with information related to the serving access node (e.g., the PLMN and cell identities of the serving access node).

The serving access node receives the UE to network relay connection setup request (block 907). The UE to network relay connection setup request is a request for the establishment of the UE to network relay connection. The request includes information that includes a PLMN selected by the remote UE, as well as the identity of the remote UE. In the case of the Layer-3 relay model, the request also includes information regarding the PC5 QoS flow to be used for the UE to network relay connection.

The serving access node performs admission control (block 909). Based on the information of the remote UE and the relay UE, the serving access node and the network control function (e.g., AMF, SMF, or PCF) perform a policy check and admission control to allow the indirect 5G connection of the remote UE through the relay UE. In the case of the Layer-2 relay model, the serving access node is provided with the QoS flow information of the remote UE.

The serving access node sends the UE to network relay connection setup response (block 911). The UE to network relay connection setup response may indicate to the remote UE that the UE to network relay connection setup is approved. The response may be received from the relay UE, where the relay UE has configured RLC entities of the sidelink radio bearers. In the case of the Layer-2 relay model, the remote UE also receives a signaling containing bearer configurations, which includes SDAP and PDCP configurations, such as the mappings of 5G QoS flows to DRBs. In the case of the Layer-3 relay model, the remote UE is configured with SDAP and PDCP configurations of the sidelink DRBs over the PC5 interface between the remote UE and the relay UE. The configurations may include the PC5 QoS flow to DRB mappings.

The serving access node receives the UE to network relay connection setup complete message (block 913). The UE to network relay connection setup complete message includes confirmation of the completion of configurations of the UE to network relay connection setup, e.g., configurations of RLC channels over Uu interface and sidelink interface. The serving access node may also receive updates of the RLC configuration of the sidelink radio bearers. The serving access node also receives from the relay UE a signaling containing confirmation of the proper configuration of SDAP and PDCP entities of the remote UE for UE to network relay connection.

Figure 10 illustrates a flow diagram of example operations 1000 occurring in a network control function participating in the establishment of a UE to network relay connection. Operations 1000 may be indicative of operations occurring in a network function as the network function participates in the establishment of a UE to network relay connection. Layer-2 and Layer-3 relay model connections may be established. Examples of the network control function includes the AMF, SMF, or PCF.

Operations 1000 begin with the network control function performing relay UE discovery and authorization (block 1005). Relay UE discovery and authorization is performed to detect relay UEs that are suitable candidates for operation as a relay UE for a remote UE. As an example, in order to be a suitable candidate for operation as a relay UE for the remote UE, a relay UE may need to be located within a specified distance to the remote UE (or a channel between the remote UE and the remote UE has adequate signal quality), as well as the relay UE being amenable to serving as a relay UE for the remote UE and the relay UE be authorized to serve as a relay UE for the remote UE. As part of the relay UE discovery and authorization, the remote UE is provided with information related to the serving access node (e.g., the PLMN and cell identities of the serving access node).

The network control function performs admission control (block 1007). Based on the information of the remote UE and the relay UE, the network control function and the serving access node perform a policy check and admission control to allow the indirect 5G connection of the remote UE through the relay UE. In the case of the Layer-2 relay model, the network control function is provided with the QoS flow information of the remote UE.

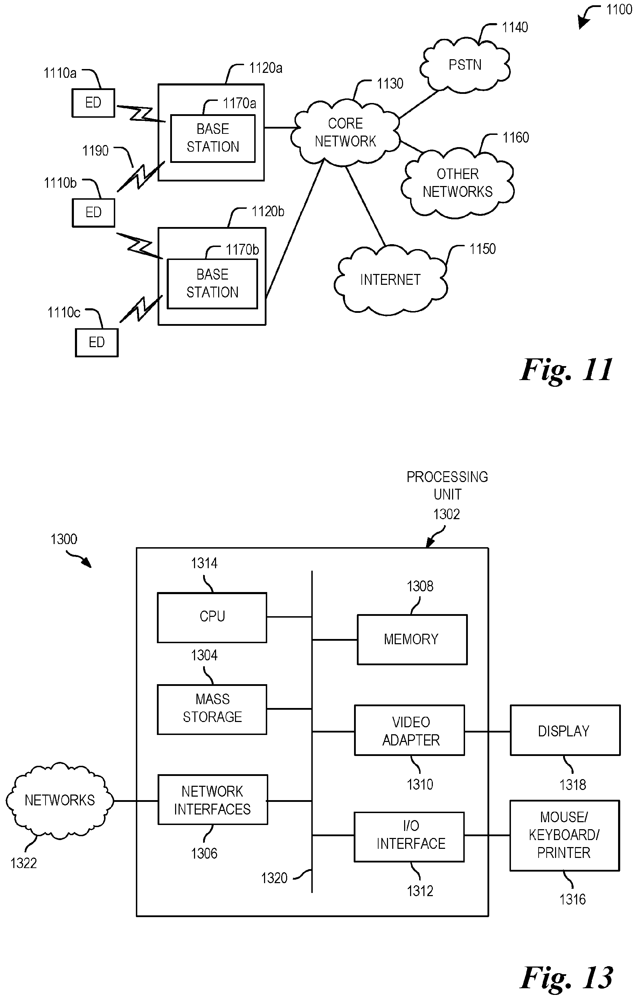

Figure 11 illustrates an example communication system 1100. In general, the system 1100 enables multiple wireless or wired users to transmit and receive data and other content. The system 1100 may implement one or more channel access methods, such as code division multiple access (CDMA), time division multiple access (TDMA), frequency division multiple access (FDMA), orthogonal FDMA (OFDMA), single-carrier FDMA (SC-FDMA), or non-orthogonal multiple access (NOMA).

In this example, the communication system 1100 includes electronic devices (ED) 1110a-1110c, radio access networks (RANs) 1120a-1120b, a core network 1130, a public switched telephone network (PSTN) 1140, the Internet 1150, and other networks 1160. While certain numbers of these components or elements are shown in Figure 11, any number of these components or elements may be included in the system 1100.

The EDs 1110a-1110c are configured to operate or communicate in the system 1100. For example, the EDs 1110a-1110c are configured to transmit or receive via wireless or wired communication channels. Each ED 1110a-1110c represents any suitable end user device and may include such devices (or may be referred to) as a user equipment or device (UE), wireless transmit or receive unit (WTRU), mobile station, fixed or mobile subscriber unit, cellular telephone, personal digital assistant (PDA), smartphone, laptop, computer, touchpad, wireless sensor, or consumer electronics device.

The RANs 1120a-1120b here include base stations 1170a-1170b, respectively. Each base station 1170a-1170b is configured to wirelessly interface with one or more of the EDs 1110a-1110c to enable access to the core network 1130, the PSTN 1140, the Internet 1150, or the other networks 1160. For example, the base stations 1170a-1170b may include (or be) one or more of several well-known devices, such as a base transceiver station (BTS), a Node-B (NodeB), an evolved NodeB (eNodeB), a Next Generation (NG) NodeB (gNB), a Home NodeB, a Home eNodeB, a site controller, an access point (AP), or a wireless router. The EDs 1110a-1110c are configured to interface and communicate with the Internet 1150 and may access the core network 1130, the PSTN 1140, or the other networks 1160.

In the implementation shown in Figure 11, the base station 1170a forms part of the RAN 1120a, which may include other base stations, elements, or devices. Also, the base station 1170b forms part of the RAN 1120b, which may include other base stations, elements, or devices. Each base station 1170a-1170b operates to transmit or receive wireless signals within a particular geographic region or area, sometimes referred to as a "cell." In some implementations, multiple-input multiple-output (MIMO) technology may be employed having multiple transceivers for each cell.

The base stations 1170a-1170b communicate with one or more of the EDs 1110a-1110c over one or more air interfaces 1190 using wireless communication links. The air interfaces 1190 may utilize any suitable radio access technology.

It is contemplated that the system 1100 may use multiple channel access functionality, including such schemes as described above. In particular implementations, the base stations and EDs implement 5G New Radio (NR), LTE, LTE-A, or LTE-B. Of course, other multiple access schemes and wireless protocols may be utilized.

The RANs 1120a-1120b are in communication with the core network 1130 to provide the EDs 1110a-1110c with voice, data, application, Voice over Internet Protocol (VoIP), or other services. Understandably, the RANs 1120a-1120b or the core network 1130 may be in direct or indirect communication with one or more other RANs (not shown). The core network 1130 may also serve as a gateway access for other networks (such as the PSTN 1140, the Internet 1150, and the other networks 1160). In addition, some or all of the EDs 1110a-1110c may include functionality for communicating with different wireless networks over different wireless links using different wireless technologies or protocols. Instead of wireless communication (or in addition thereto), the EDs may communicate via wired communication channels to a service provider or switch (not shown), and to the Internet 1150.

Although Figure 11 illustrates one example of a communication system, various changes may be made to Figure 11. For example, the communication system 1100 could include any number of EDs, base stations, networks, or other components in any suitable configuration.

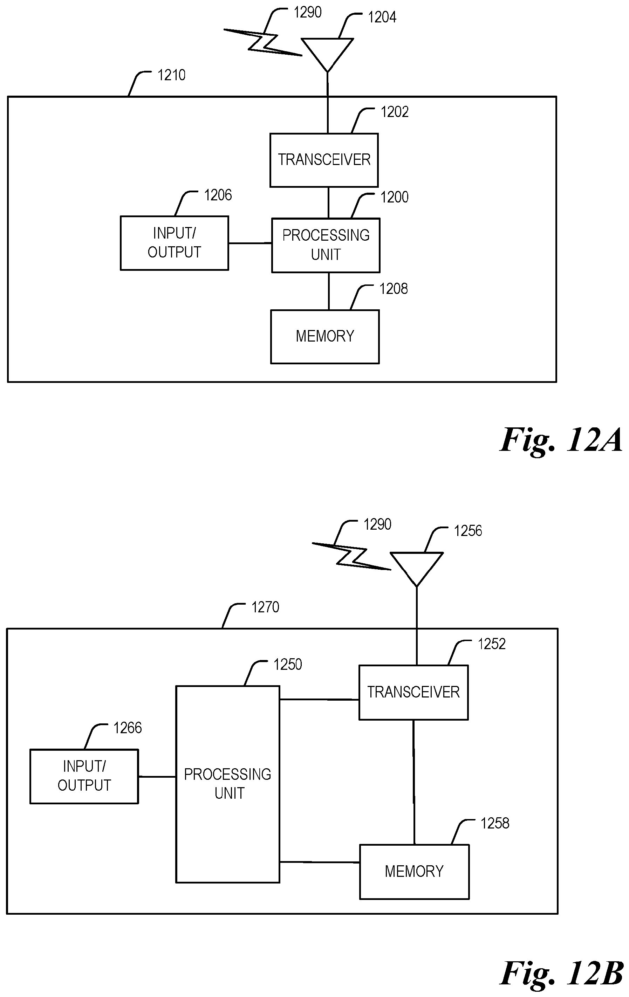

Figures 12A and 12B illustrate example devices that may implement the methods and teachings according to this disclosure. In particular, Figure 12A illustrates an example ED 1210 representing an UE, and Figure 12B illustrates an example base station 1270. These components could be used in the system 1100 or in any other suitable system.

As shown in Figure 12A, the ED 1210 includes at least one processing unit 1200. The processing unit 1200 implements various processing operations of the ED 1210. For example, the processing unit 1200 could perform signal coding, data processing, power control, input/output processing, or any other functionality enabling the ED 1210 to operate in the system 1100. The processing unit 1200 also supports the methods and teachings described in more detail above. Each processing unit 1200 includes any suitable processing or computing device configured to perform one or more operations. Each processing unit 1200 could, for example, include a microprocessor, microcontroller, digital signal processor, field programmable gate array, or application specific integrated circuit.

The ED 1210 also includes at least one transceiver 1202. The transceiver 1202 is configured to modulate data or other content for transmission by at least one antenna or NIC (Network Interface Controller) 1204. The transceiver 1202 is also configured to demodulate data or other content received by the at least one antenna 1204. Each transceiver 1202 includes any suitable structure for generating signals for wireless or wired transmission or processing signals received wirelessly or by wire. Each antenna 1204 includes any suitable structure for transmitting or receiving wireless or wired signals. One or multiple transceivers 1202 could be used in the ED 1210, and one or multiple antennas 1204 could be used in the ED 1210. Although shown as a single functional unit, a transceiver 1202 could also be implemented using at least one transmitter and at least one separate receiver.

The ED 1210 further includes one or more input/output devices 1206 or interfaces (such as a wired interface to the Internet 1150). The input/output devices 1206 facilitate interaction with a user or other devices (network communications) in the network. Each input/output device 1206 includes any suitable structure for providing information to or receiving information from a user, such as a speaker, microphone, keypad, keyboard, display, or touch screen, including network interface communications.

In addition, the ED 1210 includes at least one memory 1208. The memory 1208 stores instructions and data used, generated, or collected by the ED 1210. For example, the memory 1208 could store software or firmware instructions executed by the processing unit(s) 1200 and data used to reduce or eliminate interference in incoming signals. Each memory 1208 includes any suitable volatile or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in Figure 12B, the base station 1270 includes at least one processing unit 1250, at least one transceiver 1252, which includes functionality for a transmitter and a receiver, one or more antennas 1256, at least one memory 1258, and one or more input/output devices or interfaces 1266. A scheduler, which would be understood by one skilled in the art, is coupled to the processing unit 1250. The scheduler could be included within or operated separately from the base station 1270. The processing unit 1250 implements various processing operations of the base station 1270, such as signal coding, data processing, power control, input/output processing, or any other functionality. The processing unit 1250 can also support the methods and teachings described in more detail above. Each processing unit 1250 includes any suitable processing or computing device configured to perform one or more operations. Each processing unit 1250 could, for example, include a microprocessor, microcontroller, digital signal processor, field programmable gate array, or application specific integrated circuit.

Each transceiver 1252 includes any suitable structure for generating signals for wireless or wired transmission to one or more EDs or other devices. Each transceiver 1252 further includes any suitable structure for processing signals received wirelessly or by wire from one or more EDs or other devices. Although shown combined as a transceiver 1252, a transmitter and a receiver could be separate components. Each antenna 1256 includes any suitable structure for transmitting or receiving wireless or wired signals. While a common antenna 1256 is shown here as being coupled to the transceiver 1252, one or more antennas 1256 could be coupled to the transceiver(s) 1252, allowing separate antennas 1256 to be coupled to the transmitter and the receiver if equipped as separate components. Each memory 1258 includes any suitable volatile or non-volatile storage and retrieval device(s). Each input/output device 1266 facilitates interaction with a user or other devices (network communications) in the network. Each input/output device 1266 includes any suitable structure for providing information to or receiving/providing information from a user, including network interface communications.

Figure 13 is a block diagram of a computing system 1300 that is used for implementing the devices and methods disclosed herein. For example, the computing system can be any entity of UE, access network (AN), mobility management (MM), session management (SM), user plane gateway (UPGW), or access stratum (AS). Specific devices may utilize all of the components shown or only a subset of the components, and levels of integration may vary from device to device. Furthermore, a device may contain multiple instances of a component, such as multiple processing units, processors, memories, transmitters, receivers, etc. The computing system 1300 includes a processing unit 1302. The processing unit includes a central processing unit (CPU) 1314, memory 1308, and may further include a mass storage device 1304, a video adapter 1310, and an I/O interface 1312 connected to a bus 1320.

The bus 1320 may be one or more of any type of several bus architectures including a memory bus or memory controller, a peripheral bus, or a video bus. The CPU 1314 may comprise any type of electronic data processor. The memory 1308 comprises any type of non-transitory system memory such as static random access memory (SRAM), dynamic random access memory (DRAM), synchronous DRAM (SDRAM), read-only memory (ROM), or a combination thereof. In an implementation, the memory 1308 may include ROM for use at boot-up, and DRAM for program and data storage for use while executing programs.

The mass storage 1304 may comprise any type of non-transitory storage device configured to store data, programs, and other information and to make the data, programs, and other information accessible via the bus 1320. The mass storage 1304 may comprise, for example, one or more of a solid state drive, hard disk drive, a magnetic disk drive, or an optical disk drive.

The video adapter 1310 and the I/O interface 1312 provide interfaces to couple external input and output devices to the processing unit 1302. As illustrated, examples of input and output devices include a display 1318 coupled to the video adapter 1310 and a mouse, keyboard, or printer 1316 coupled to the I/O interface 1312. Other devices may be coupled to the processing unit 1302, and additional or fewer interface cards may be utilized. For example, a serial interface such as Universal Serial Bus (USB) (not shown) may be used to provide an interface for an external device.

The processing unit 1302 also includes one or more network interfaces 1306, which may comprise wired links, such as an Ethernet cable, or wireless links to access nodes or different networks. The network interfaces 1306 allow the processing unit 1302 to communicate with remote units via the networks. For example, the network interfaces 1306 may provide wireless communication via one or more transmitters/transmit antennas and one or more receivers/receive antennas. In an implementation, the processing unit 1302 is coupled to a local-area network 1322 or a wide-area network for data processing and communications with remote devices, such as other processing units, the Internet, or remote storage facilities.

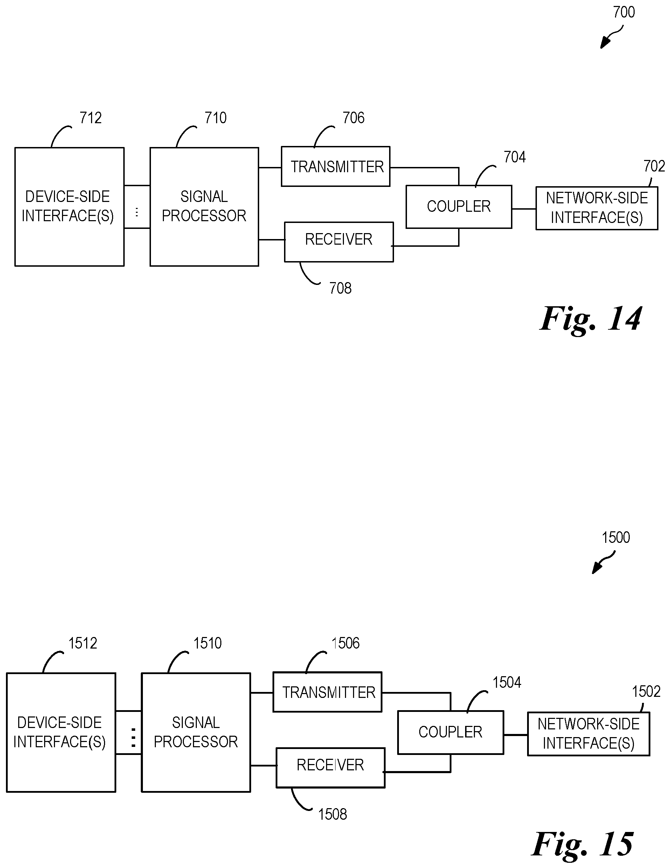

Figure 14 illustrates a block diagram of an implementation processing system 1400 for performing methods described herein, which may be installed in a host device. As shown, the processing system 1400 includes a processor 1404, a memory 1406, and interfaces 1410-1414, which may (or may not) be arranged as shown in Figure 14. The processor 1404 may be any component or collection of components adapted to perform computations and/or other processing related tasks, and the memory 1406 may be any component or collection of components adapted to store programming and/or instructions for execution by the processor 1404. In an implementation, the memory 1406 includes a non-transitory computer readable medium storing instructions. The interfaces 1410, 1412, 1414 may be any component or collection of components that allow the processing system 1400 to communicate with other devices/components and/or a user. For example, one or more of the interfaces 1410, 1412, 1414 may be adapted to communicate data, control, or management messages from the processor 1404 to applications installed on the host device and/or a remote device. As another example, one or more of the interfaces 1410, 1412, 1414 may be adapted to allow a user or user device (e.g., personal computer (PC), etc.) to interact/communicate with the processing system 1400. The processing system 1400 may include additional components not depicted in Figure 14, such as long term storage (e.g., non-volatile memory, etc.).

In some implementations, the processing system 1400 is included in a network device that is accessing, or part otherwise of, a telecommunications network. In one example, the processing system 1400 is in a network-side device in a wireless or wireline telecommunications network, such as a base station, a relay station, a scheduler, a controller, a gateway, a router, an applications server, or any other device in the telecommunications network. In other implementations, the processing system 1400 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network.

In some implementations, one or more of the interfaces 1410, 1412, 1414 connects the processing system 1400 to a transceiver adapted to transmit and receive signaling over the telecommunications network. Figure 15 illustrates a block diagram of a transceiver 1500 adapted to transmit and receive signaling over a telecommunications network. The transceiver 1500 may be installed in a host device. As shown, the transceiver 1500 comprises a network-side interface 1502, a coupler 1504, a transmitter 1506, a receiver 1508, a signal processor 1510, and a device-side interface 1512. The network-side interface 1502 may include any component or collection of components adapted to transmit or receive signaling over a wireless or wireline telecommunications network. The coupler 1504 may include any component or collection of components adapted to facilitate bi-directional communication over the network-side interface 1502. The transmitter 1506 may include any component or collection of components (e.g., up-converter, power amplifier, etc.) adapted to convert a baseband signal into a modulated carrier signal suitable for transmission over the network-side interface 1502. The receiver 1508 may include any component or collection of components (e.g., down-converter, low noise amplifier, etc.) adapted to convert a carrier signal received over the network-side interface 1502 into a baseband signal. The signal processor 1510 may include any component or collection of components adapted to convert a baseband signal into a data signal suitable for communication over the device-side interface(s) 1512, or vice-versa. The device-side interface(s) 1512 may include any component or collection of components adapted to communicate data-signals between the signal processor 1510 and components within the host device (e.g., the processing system 1400, local area network (LAN) ports, etc.).

The transceiver 1500 may transmit and receive signaling over any type of communications medium. In some implementations, the transceiver 1500 transmits and receives signaling over a wireless medium. For example, the transceiver 1500 may be a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), etc.). In such implementations, the network-side interface 1502 comprises one or more antenna/radiating elements. For example, the network-side interface 1502 may include a single antenna, multiple separate antennas, or a multi-antenna array configured for multilayer communication, e.g., single input multiple output (SIMO), multiple input single output (MISO), multiple input multiple output (MIMO), etc. In other implementations, the transceiver 1500 transmits and receives signaling over a wireline medium, e.g., twisted-pair cable, coaxial cable, optical fiber, etc.

Specific processing systems and/or transceivers may utilize all of the components shown, or only a subset of the components, and levels of integration may vary from device to device.

It should be appreciated that one or more steps of the implementation methods provided herein may be performed by corresponding circuits, units, or modules. For example, a signal may be transmitted by a transmitting circuit, unit, or module. A signal may be received by a receiving circuit, unit, or module. A signal may be processed by a processing circuit, unit, or module. Other steps may be performed by a participating circuit, unit, or module.The respective circuits, units, or modules may be hardware, software, or a combination thereof. For instance, one or more of the circuits, units, or modules may be an integrated circuit, such as field programmable gate arrays (FPGAs) or application-specific integrated circuits (ASICs).

The scope of protection is defined by the appended claims.

## Claims

1. A method implemented by a first user equipment (UE), the method comprising:
receiving (809), by the first UE from a second UE, a UE to network relay connection setup request;
sending (811), by the first UE to an access node, a relay connection setup request;
receiving (813), by the first UE from the access node, a relay connection setup response; and
sending (815), by the first UE to the second UE, a UE to network relay connection setup response;
**characterised in that** the relay connection setup response comprises configuration information of an adaptation layer mapping RLC channels of the sidelink between the first UE and the second UE and RLC channels between the first UE and the access node.

2. The method of claim 1, further comprising participating, by the first UE with the second UE, in a radio resource control, RRC, connection establishment procedure; wherein the RRC connection establishment procedure comprises establishing a RRC connection between the first UE and the access node and establishing a sidelink RRC connection for UE to network communication.

3. The method of claim 1 or 2 further comprising participating, by the first UE with the second UE, in a discovery and authorization procedure, wherein the discovery and authorization procedure comprises discovering the first UE as a suitable and authorized relay for the second UE.

4. The method of any one of claims 1-3, wherein the relay connection setup response comprises a radio bearer of the second UE.

5. The method of claim 4, wherein the relay connection setup response comprises information of SDAP and PDCP configurations of a data radio bearer, DRB, and QoS flow to DRB mapping.

6. A communication apparatus, comprising modules configured for carrying out a method according to any one of claims 1-5.

7. A non-transitory computer-readable media storing computer instructions, that when executed by one or more processors in an apparatus, cause the apparatus to perform a method according to any one of claims 1-5.

## Patentansprüche

1. Verfahren, das durch ein erstes Benutzergerät, UE, umgesetzt wird, wobei das Verfahren Folgendes umfasst:
Empfangen (809), durch das erste UE von einem zweiten UE, einer Anforderung zum Aufbau einer Relaisverbindung zwischen einem UE und einem Netzwerk;
Senden (811), durch das erste UE an einen Zugangsknoten, einer Anforderung zum Aufbau einer Relaisverbindung;
Empfangen (813), durch das erste UE von dem Zugangsknoten, einer Antwort auf den Aufbau einer Relaisverbindung; und
Senden (815), durch das erste UE an das zweite UE, einer Antwort auf den Aufbau einer Relaisverbindung zwischen einem UE und einem Netzwerk;
**dadurch gekennzeichnet, dass**
die Antwort auf den Aufbau der Relaisverbindung Konfigurationsinformationen einer Anpassungsschicht, die RLC-Kanäle des Sidelinks zwischen dem ersten UE und dem zweiten UE sowie RLC-Kanäle zwischen dem ersten UE und dem Zugangsknoten abbildet, umfasst.

2. Verfahren nach Anspruch 1, ferner umfassend Teilnehmen, durch das erste UE mit dem zweiten UE, an einem Vorgang zum Herstellen einer Funkressourcensteuerungsverbindung, RRC-Verbindung; wobei der Vorgang zum Aufbau einer RRC-Verbindung Herstellen einer RRC-Verbindung zwischen dem ersten UE und dem Zugangsknoten sowie Herstellen einer Sidelink-RRC-Verbindung für eine Kommunikation zwischen UE und Netzwerk umfasst.

3. Verfahren nach Anspruch 1 oder 2, ferner umfassend Teilnehmen, durch das erste UE mit dem zweiten UE, an einem Ermittlungs- und Autorisierungsvorgang, wobei der Ermittlungs- und Autorisierungsvorgang Ermitteln des ersten UE als ein geeignetes und autorisiertes Relais für das zweite UE umfasst.

4. Verfahren nach einem der Ansprüche 1 bis 3, wobei die Antwort zum Aufbau der Relaisverbindung einen Funkträger des zweiten UE umfasst.

5. Verfahren nach Anspruch 4, wobei die Antwort zum Aufbau der Relaisverbindung Informationen über die SDAP- und PDCP-Konfigurationen eines Datenfunkträgers, DRB, und QoS-Fluss-zu-DRB-Abbildung umfasst.

6. Kommunikationsvorrichtung, umfassend Module, die zum Durchführen eines Verfahrens nach einem der Ansprüche 1-5 konfiguriert sind.

7. Nicht flüchtiges, computerlesbares Medium, das Computeranweisungen speichert, die, wenn sie durch einen oder mehrere Prozessoren in einer Vorrichtung ausgeführt werden, die Vorrichtung dazu veranlassen, ein Verfahren nach einem der Ansprüche 1-5 durchzuführen.

## Revendications

1. Procédé mis en œuvre par un premier équipement utilisateur (UE), le procédé comprenant :
la réception (809), par le premier UE en provenance d'un second UE, d'une demande d'établissement de connexion de relais entre l'UE et le réseau ;
l'envoi (811), par le premier UE à un nœud d'accès, d'une demande d'établissement de connexion de relais ;
la réception (813), par le premier UE en provenance du nœud d'accès, d'une réponse d'établissement de connexion de relais ; et
l'envoi (815), par le premier UE au second UE, d'une réponse d'établissement de connexion de relais entre l'UE et le réseau ;
**caractérisé en ce que**
la réponse d'établissement de connexion de relais comprend des informations de configuration d'une couche d'adaptation mappant les canaux RLC de la liaison latérale entre le premier UE et le second UE et les canaux RLC entre le premier UE et le nœud d'accès.

2. Procédé selon la revendication 1, comprenant également la participation, par le premier UE avec le second UE, à une procédure d'établissement de connexion de commande de ressources radio, RRC ; dans lequel la procédure d'établissement de connexion RRC comprend l'établissement d'une connexion RRC entre le premier UE et le nœud d'accès et l'établissement d'une connexion RRC de liaison latérale pour la communication entre l'UE et le réseau.

3. Procédé selon la revendication 1 ou 2 comprenant également la participation, par le premier UE avec le second UE, à une procédure de découverte et d'autorisation, dans lequel la procédure de découverte et d'autorisation comprend la découverte du premier UE comme relais approprié et autorisé pour le second UE.

4. Procédé selon l'une quelconque des revendications 1 à 3, dans lequel la réponse d'établissement de connexion de relais comprend un support radio du second UE.

5. Procédé selon la revendication 4, dans lequel la réponse d'établissement de connexion de relais comprend des informations de configurations SDAP et PDCP d'un support radio de données, DRB et le mappage du flux QoS au DRB.

6. Appareil de communication, comprenant des modules configurés pour exécuter un procédé selon l'une quelconque des revendications 1 à 5.

7. Supports non transitoires lisibles par ordinateur stockant des instructions informatiques qui, lorsqu'elles sont exécutées par un ou plusieurs processeurs dans un appareil, amènent l'appareil à réaliser un procédé selon l'une quelconque des revendications 1 à 5.
